# EUROPÄISCHE PATENTSCHRIFT

(11) **EP 3 798 873 B1**
(45) Veröffentlichungstag und Bekanntmachung des Hinweises auf die Patenterteilung: **10.05.2023**
(21) Anmeldenummer: 19199173.6
(22) Anmeldetag: 24.09.2019
(51) Int. Cl.: G06F 21/12

(54) **VERFAHREN ZUM SCHÜTZEN EINER COMPUTER-IMPLEMENTIERTEN ANWENDUNG VOR MANIPULATION**
METHOD FOR PROTECTING A COMPUTER-IMPLEMENTED APPLICATION FROM MANIPULATION
PROCÉDÉ DE PROTECTION D'UNE APPLICATION MISE EN UVRE PAR ORDINATEUR CONTRE LA MANIPULATION

(43) Veröffentlichungstag der Anmeldung: 31.03.2021
(73) Patentinhaber: Siemens Aktiengesellschaft, 80333 München (DE)
(72) Erfinder: Feist, Christian Peter, 80689 München (DE); Zwanzger, Johannes, 85579 Neubiberg (DE)
(74) Vertreter: Siemens Patent Attorneys

(56) Entgegenhaltungen:
- DE-A1-102005 046 696
- DE-A1-102016 009 439
- US-A1- 2006 100 749

## Beschreibung

Die Erfindung betrifft ein Verfahren zum Schützen einer Computer-implementierten Anwendung, die eine Vielzahl von einzelnen Codestellen aufweist, vor Manipulation.

Industrielle Geräte, zum Beispiel Steuergeräte, Feldgeräte, Geräte oder Gateways, die in einem Internet der Dinge kommunizieren, führen oft eine Mehrzahl von Applikationen aus, deren Integrität wichtig für die korrekte und erwartete Funktionsweise eines Gerätes ist. Hierbei kann es sich insbesondere um sicherheitskritische und geschäftsentscheidende Funktionalität handeln. Zudem befinden sich industrielle Geräte typischerweise über eine sehr lange Zeit, teilweise 30 bis 40 Jahre, in Benutzung und werden in zunehmend exponierten Umgebungen wie beispielsweise offenen Anlagenetzen oder im Internet eingesetzt. Der Schutz der Integrität der Applikationen auf einem solchen Gerät wird somit zunehmend wichtiger. Die Begriffe Applikation und Anwendung werden im Weiteren bedeutungsgleich verwendet.

Außerdem ergibt sich bei der Entwicklung von Anwendungen für solche Geräte oftmals der Bedarf, diese gegen eine Nachkonstruktion, auch Reverse Engineering genannt, oder so genanntes Code Lifting zu schützen. Beim Reverse Engineering versucht ein Angreifer, auf Basis eines Codes der Anwendung und eines Laufzeitverhaltens der Applikation deren innere Zusammenhänge zu verstehen. Typische Gründe dafür sind beispielsweise in der Software enthaltenes Know-How zu extrahieren oder gezielte Manipulationen einzubringen, um ein bestimmtes Verhalten zu erreichen. Beim Codelifting benötigt der Angreifer dagegen kein genaues Verständnis der Applikation und insbesondere des Programmcodes der Anwendung und versucht stattdessen eine Kopie des Codes für eigene Zwecke zu nutzen, etwa zum illegalen Nachbau von Produkten.

Beide Angriffe können durch Integritätsschutzmaßnahmen der Applikation deutlich erschwert werden.

Gängige Methoden zum Integritätsschutz, wie digitale Signaturen, benötigen oft zusätzliche und aufwändige Schutzmechanismen für die in der Verifikation verwendeten Schlüssel, beispielsweise einen Hardwarebasierten Schlüsselspeicher oder weiteren Integritätsschutz. Solche Schutzmechanismen sind vielfach nicht vorhanden, lösen das Problem nur teilweise und/oder sind kompliziert in Betrieb zu nehmen. Die Dokumente DE 10 2005 046696 und DE 10 2016 009439 sind Teil des Stands der Technik.

Es ist somit die Aufgabe der vorliegenden Erfindung Computer-implementierte Anwendungen effektiv und effizient gegen Manipulation oder auch einer Nachkonstruktion durch Reverse Engineering oder ein Codelifting zu schützen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zum Schützen einer Computer-implementierten Anwendung vor Manipulation mit den Verfahrensschritten:
- Bereitstellen einer modifizierten Anwendung, die gegenüber der Anwendung, die eine Vielzahl von einzelnen Codestellen aufweist, zusätzlich mindestens einen Prüfcode umfasst,
- Ausführen der modifizierten Anwendung, wobei der mindestens eine Prüfcode bei Laufzeit der modifizierten Anwendung die Schritte durchführt:
   Ausführen einer kryptographischen Messfunktion auf mindestens eine vorgegebene, zu messende Codestelle der modifizierten Anwendung und
   Überprüfen des Ergebnisses der Messfunktion gegenüber mindestens einem im Voraus bestimmten Referenzwert, und
- Ausführen der im Sinne der Anwendung korrekten Codestellen, wenn das Ergebnis der Messfunktion (Hi) mit dem Referenzwert übereinstimmt.

Die Computer-implementierte Anwendung wird dabei als Gesamtheit der einzelnen Codestellen verstanden. Die kryptographische Messfunktion wird somit während der Laufzeit der Anwendung ausgeführt, wobei nicht die Anwendung selbst, sondern eine durch Hinzufügen eines Prüfcodes modifizierte Anwendung ausgeführt wird. Die Anwendung wird nur dann korrekt ausgeführt, wenn die Überprüfung zu einem positiven Ergebnis führt. Das Überprüfen kann beispielsweise explizit durch ein Vergleichen des Messergebnisses, also des Ergebnisses der Messfunktion, mit dem Referenzwert sein. Bei Übereinstimmung des Messergebnisses mit dem Referenzwert liegt ein positives Prüfergebnis vor. Das Überprüfen kann aber auch implizit erfolgen. Dabei wird beispielsweise der Referenzwert als Parameter zum Verschlüsseln einer Codestelle verwendet und die verschlüsselte Codestelle als angepasste Codestelle anstatt der unverschlüsselten Codestelle in die modifizierte Anwendung eingebracht. Ein positives Prüfergebnis liegt implizit dann vor, wenn sich zur Laufzeit nach dem Entschlüsseln der Codestelle mit dem Ergebnis der Messfunktion als Parameter der ursprüngliche und damit im Sinne der Anwendung korrekte Code ergibt. Dies ist nur dann der Fall, wenn das Ergebnis der Messfunktion mit dem Referenzwert übereinstimmt. Somit kann einerseits eine Manipulation des Programmcodes erkannt werden. Des Weiteren wird die Anwendung beziehungsweise der Ablauf der Codestellen durch das Einfügen des Prüfcodes verschleiert und ein Reverse Engineering erschwert. Es können mehrere gleiche oder auch unterschiedliche Prüfcodes in eine Anwendung eingefügt werden.

Die zu messende Codestelle umfasst dabei eine oder mehrere Codestellen, auf die die Messfunktion angewendet wird. Eine zu prüfende Codestelle ist diejenige Codestelle, auf die eine Prüffunktion im Rahmen einer Prüfroutine ausgeführt wird. Eine angepasste, zu prüfende Codestelle ist eine Codestelle, die gegenüber der ursprünglichen Anwendung verändert wurde und in dieser veränderten und damit angepassten Form in der modifizierten Anwendung enthalten ist. Die zu messende Codestelle, die zu prüfende Codestelle und die angepasste Codestelle können sich überschneiden, oder verschieden sein. Beispielsweise kann die zu messende und die zu prüfende Codestelle identisch sein.

In einer vorteilhaften Ausführungsform wird, wenn das Ergebnis der Messfunktion nicht mit dem Referenzwert übereinstimmt, eine Ersatzaktion ausgeführt, indem mindestens eine Ersatzcodestelle, die von der im Sinne der Anwendung korrekten Codestelle unterschiedlich ist, oder eine im Sinne der Anwendung fehlerhafte Codestelle ausgeführt.

Somit kann eine oder auch mehrere dedizierte Ersatzaktionen als Ersatzcodestelle in die Anwendung eingebaut werden. Eine einzige Ersatzcodestelle ist einfach implementierbar. Durch eine für einen bestimmten Prüfcode dediziert erstellte Ersatzcodestelle kann individuell auf die jeweilige manipulierte Codestelle reagiert werden. Die Ersatzaktion kann mindestens eine, aber auch eine Vielzahl von Ersatzcodestellen, umfassen, die bei einer festgestellten Manipulation von unterschiedlichen Codestellen unterschiedliche Ersatzaktionen durchführen kann. Somit können damit unterschiedliche Ersatzaktionen, beispielsweise abhängig von der überprüften Codestelle, ausgeführt werden. Ersatzcodestellen werden insbesondere bei einem expliziten Prüfen verwendet.. Wird eine implizite Überprüfung mit einem Messergebnis durchgeführt, das sich vom Referenzwert unterscheidet, unterscheidet sich, beispielsweise im Falle der Verwendung von verschlüsselten Codestellen für die implizite Überprüfung, die durch das Entschlüsseln ermittelte Codestelle von der ursprünglichen Codestelle der Anwendung. Somit wird in diesem Fall implizit "falscher" Code erzeugt, der bei Ausführung üblicherweise zu einem Fehler führt.

In einer vorteilhaften Ausführungsform wird der mindestens eine Prüfcode während der Laufzeit der Anwendung einmalig, in zyklischen Abständen, vor Ausführung mindestens einer vorgegebenen Codestelle oder nach dem Eintreten eines vorgegebenen Ereignisses ausgeführt.

So kann beispielsweise ein Prüfcode nur für selektierte, kritische Codestellen vorliegen und vor deren Ausführung ausgeführt werden. Bei weniger kritischen Anwendungen kann ein Prüfcode lediglich einmal, beispielsweise kurz nach Start der Anwendung oder in zyklischen Abständen durch die Platzierung eines Prüfcodes beispielsweise an einer Stelle, die im Ablauf der Anwendung mehrfach durchlaufen wird, realisiert werden. Ein Prüfcode kann insbesondere beim Eintreten eines vorgegebenen oder auch eines unerwarteten Ereignisses beziehungsweise oder eines Ereignisses, das auf eine vorangehende Manipulation hindeutet, ausgeführt werden.

Im erfindungsgemäßen Verfahren umfasst der Prüfcode die Messfunktion und eine Prüfroutine und gibt die zu messende Codestelle und die zu prüfende Codestelle an, wobei die Prüfroutine angibt, mit welcher Prüffunktion die zu prüfende Codestelle und das Ergebnis der Messfunktion mit dem Referenzwert überprüft wird.

Durch den Prüfcode ist somit das Ausführen der Messfunkton und das Überprüfen vollständig vorgegeben. Es können unterschiedliche Prüfcodes mit unterschiedlichen Mess- und Prüffunktionen für verschiedene zu prüfende Codestellen erstellt und einfach durch die modifizierte Anwendung ausgeführt werden. Die zu prüfende Codestelle kann bei einer expliziten Prüfung auch eine leere Codestelle sein, sodass lediglich die Messfunktion auf die zu messende Codestelle ausgeführt wird und die Prüffunktion die Gleichheit zwischen dem Messergebnis und dem Referenzwert prüft und keine zu prüfenden Codestelle in die Prüffunktion eingeht.

In einer vorteilhaften Ausführungsform ist die Messfunktion eine kryptographische Hashfunktion, insbesondere mit einem auf eine geringe Anzahl von Ausgabebits trunkierten Ausgabewert.

Eine Hashfunktion erzeugt einen Hashwert, aus dem nur mit hohem Aufwand auf die zu messende Codestelle als Eingabewert zurückgeschlossen werden kann. Durch das Trunkieren des Ausgabewertes auf eine geringe Anzahl von Ausgabe-Bits wird die Vorbereitung der modifizierten Anwendung erleichtert, insbesondere in Fällen, in denen entweder durch äußere Bedingungen ein fester Referenzwert vorgegeben ist oder sich eine Selbstreflexion dadurch ergibt, dass der Referenzwert oder die zu prüfende Codestelle Teil der zu messenden Codestelle sind. Trunkieren bezeichnet dabei eine Rechenoperation, bei der eine Folge, hier insbesondere der resultierende Hashwert, auf eine gewisse Länge abgeschnitten wird.

In einer vorteilhaften Ausführungsform wird die Messfunktion ausschließlich auf die eine oder mehrere zu messende Codestellen ausgeführt.

Die zu messenden Codestellen sind dabei gegenüber den ursprünglichen Codestellen unverändert in der modifizierten Anwendung enthalten. Dies vereinfacht ein Instrumentieren der modifizierten Anwendung, das heißt das Ermitteln der gegenüber der ursprünglichen Anwendung veränderten Codestellen in Abhängigkeit von einem im Voraus bestimmten Referenzwert. Insbesondere wird der Referenzwert im Voraus bestimmt, indem die Messfunktion auf die zu messenden Codestellen ausgeführt wird. Dieser Referenzwert wird dann insbesondere im Prüfcode angeordnet und durch die Messfunktion zur Laufzeit ermittelt.

In einer vorteilhaften Ausführungsform wird die kryptographische Messfunktion auf die mindestens eine vorgegebene zu messende Codestelle und zusätzlich auf zumindest Teile der Prüfroutine und/oder auf zumindest Teile der Messfunktion des Prüfcodes ausgeführt.

Dies erschwert es einem Angreifer, den Zusammenhang zwischen der zu messenden Codestelle und dem entsprechenden Referenzwert zu identifizieren bzw. zu einer manipulierten Codestelle den passenden manipulierten Referenzwert zu erstellen.

In einer vorteilhaften Ausführungsform wird durch die Prüfroutine ein Vergleichen des Ergebnisses der Messfunktion mit dem Referenzwert durchgeführt. Diese Prüfroutine ermöglicht einen expliziten Vergleich des Messergebnisses mit dem Referenzwert. Die Prüfroutine ist mit geringem Rechenaufwand durchzuführen und verzögert somit die Ausführung der modifizierten Anwendung nur geringfügig gegenüber der ursprünglichen Anwendung.

In einer vorteilhaften Ausführungsform wird der Referenzwert vor dem Bereitstellen der modifizierten Anwendung explizit als Teil des Prüfcodes in der modifizierten Anwendung angeordnet.

Dies hat den Vorteil, dass der Referenzwert im Prüfcode und somit in der modifizierten Anwendung enthalten ist und bei einer unerlaubten Manipulation der Anwendung auch der Referenzcode angepasst werden muss. Dies erschwert eine unbemerkte Manipulation der Anwendung.

In einer vorteilhaften Ausführungsform wird durch die Prüfroutine eine kryptographische Entschlüsselungsfunktion auf eine angepasste zu prüfende Codestelle mit dem Referenzwert als zugehörigem Entschlüsselungsschlüssel ausgeführt.

Durch die Prüfroutine wird somit die angepasste, zu prüfende Codestelle mit Hilfe des Referenzwerts entschlüsselt. Die angepasste, zu prüfende Codestelle muss dabei so strukturiert sein, dass sie der entsprechend kryptographisch verschlüsselten, im Sinne der Anwendung korrekten Codestelle entspricht. Ein entsprechendes Entschlüsseln der so modifizierten Codestelle mit dem zugehörigen Entschlüsselungsschlüssel ergibt wieder die im Sinne der Anwendung korrekte Codestelle. Die korrekte Codestelle kann aus einer in dieser Weise angepassten, zu prüfenden Codestelle nur sehr schwer rekonstruiert werden.

In einer vorteilhaften Ausführungsform wird vor dem Bereitstellen der modifizierten Anwendung die angepasste, zu prüfende Codestelle durch Verschlüsseln der zu prüfenden Codestelle mit dem Referenzwert ermittelt und die zu prüfende Codestelle durch die angepasste, zu prüfende Codestelle in der modifizierten Anwendung ersetzt.

Dies erschwert es einem Angreifer, der keine Information über den Zusammenhang zwischen der Prüfroutine und dem Referenzwert hat, eine zielgerichtete Manipulation an der sich nach dem Entschlüsselungsvorgang ergebenden zu prüfenden Codestelle vorzunehmen und eine vorgenommene Manipulation durch die entsprechende Wahl des Referenzwertes und einer angepassten, zu prüfenden Codestelle zu verschleiern.

In einer vorteilhaften Ausführungsform wird beim Erstellen des Prüfcodes ein zufälliger Referenzwert gewählt und die zu messende Codestelle derart erzeugt, dass das Ergebnis der Messfunktion angewandt auf die zu messende Codestelle mit dem zufällig gewählten Referenzwert übereinstimmt.

Dies kann mit einem iterativen Verfahren erreicht werden, indem bei Nichtübereinstimmung entweder ein neuer zufälliger Referenzwert gewählt oder die Codestelle durch eine geeignete Modifikationsfunktion logisch äquivalent in eine andere Form transformiert wird. Ein solches Vorgehen hat den Vorteil, dass die Erfindung auch in Fällen von Selbstreflexion, bei denen das Ergebnis der Messfunktion zur Laufzeit von der Wahl des Referenzwertes vor Bereitstellung der Anwendung abhängt, angewendet werden kann. Solche Fälle ergeben sich beispielsweise, wenn der Referenzwert in der zu messenden Codestelle als Konstante hinterlegt ist oder eine angepasste, zu prüfende Codestelle, welche mit dem Referenzwert verschlüsselt wurde, Teil der zu messenden Codestelle ist. Die beschriebene Ausführungsform ermöglicht insbesondere, den vollständigen Code einer Anwendung zur Laufzeit zu überprüfen. Andererseits wird der Aufwand zum Generieren der angepassten zu messenden Stelle höher.

In einer vorteilhaften Ausführungsform werden unterschiedliche kryptographische Messfunktionen zum Messen von verschiedenen zu messenden Codestellen und/oder unterschiedliche Prüfroutinen zum Überprüfen von verschiedenen zu prüfenden Codestellen verwendet.

Dies erschwert es dem Angreifer, die Struktur der Prüfcodes zu ermitteln.

In einer vorteilhaften Ausführungsform ist die Ersatzcodestelle und/oder die Prüfroutine kryptographisch geschützt oder obfuskiert in der modifizierten Anwendung angeordnet.

Dadurch können Ersatzcodestellen und somit Reaktionsinstruktionen nur schwer manipuliert werden, sodass die gewünschte Reaktion korrekt ausgeführt wird. Insbesondere werden Prüfroutine und Ersatzcodestellen in einem schwer trennbaren Block obfuskiert.

Ein weiterer Aspekt der Erfindung betrifft eine Vorrichtung zum Ausführen einer vor Manipulation geschützten Computer-implementierten Anwendung umfassend eine Speichereinheit, eine Prüfeinheit und eine Anwendungseinheit. Die Speichereinheit ist dabei derart ausgebildet, eine modifizierte Anwendung, die gegenüber der Anwendung, die eine Vielzahl von einzelnen Codestellen aufweist, zusätzlich mindestens einen Prüfcode umfasst, bereitzustellen. Die Prüfeinheit ist derart ausgebildet, die modifizierte Anwendung auszuführen, wobei der mindestens eine Prüfcode bei Laufzeit der modifizierten Anwendung die Schritte, Ausführen einer kryptographischen Messfunktion auf mindestens eine vorgegebene, zu messende Codestelle der modifizierten Anwendung und Überprüfen des Ergebnisses der Messfunktion gegenüber mindestens einem Referenzwert, durchführt. Die Anwendungseinheit ist derart ausgebildet, die im Sinne der Anwendung korrekte Codestelle auszuführen, wenn das Ergebnis der Messfunktion mit dem Referenzwert übereinstimmt.

Die Vorrichtung erschwert es einem unerlaubten Dritten, aus der bereitgestellten modifizierten Anwendung zurück auf die Anwendung selbst beziehungsweise ihre Codestellen zu schließen und so die Anwendung in gleicher Weise nachzubauen oder die Anwendung gezielt zu manipulieren.

Ein weiterer Aspekt der Erfindung betrifft ein Computerprogrammprodukt, umfassend ein, insbesondere nicht volatiles, Computer-lesbares Medium, das direkt in einen Speicher eines digitalen Computers ladbar ist, umfassend Programmcodeteile, die dazu geeignet sind, die Schritte des beschriebenen Verfahrens durchzuführen.

Sofern es in der nachfolgenden Beschreibung nicht anders angegeben ist, beziehen sich die Begriffe "Bereitstellen", "Ausführen", "Überprüfen" und dergleichen, vorzugsweise auf Handlungen und/oder Prozesse und/oder Verarbeitungsschritte, die Daten verändern oder erzeugen und/oder die Daten in andere Daten überführen, wobei die Daten insbesondere als physikalische Größen dargestellt werden oder vorliegen können, beispielsweise als elektrische Impulse.

Die Vorrichtung kann beispielsweise als Computer ausgebildet sein. Computer können beispielsweise Personal Computer, Feldgeräte oder Internet der Dinge-Geräte sein, die Rechnergestützt Daten verarbeiten können, Prozessoren und andere elektronische Geräte zur Datenverarbeitung sein.

Unter Computer-implementiert kann im Zusammenhang mit der Erfindung beispielsweise eine Implementierung des Verfahrens verstanden werden, bei der insbesondere ein Prozessor mindestens einen Verfahrensschritt des Verfahrens ausführt.

Unter einem Prozessor kann im Zusammenhang mit der Erfindung beispielsweise elektronischer Baustein oder eine elektronische Schaltung verstanden werden. Unter eine Speichereinheit kann im Zusammenhang mit der Erfindung beispielsweise ein Speicher in Form von Arbeitsspeicher oder eine Festplatte verstanden werden.

Die jeweilige "Einheit", zum Beispiel die Prüfeinheit oder Anwendungseinheit, kann hardwaretechnisch und/oder auch softwaretechnisch implementiert sein.

Bei einer hardwaretechnischen Implementierung kann die jeweilige Einheit als Vorrichtung oder als Teil einer Vorrichtung, zum Beispiel als Computer oder als Mikroprozessor ausgebildet sein.

Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Ein Computerprogrammprodukt kann beispielsweise als Speichermedium, wie zum Beispiel eine Speicherkarte oder in Form einer herunterladbaren Datei von einem Server in einem Netzwerk bereitgestellt oder geliefert werden.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Figur 1: ein Ausführungsbeispiel des erfindungsgemäßen Verfahrens in Form eines Flussdiagramms;
- Figur 2: ein Ausführungsbeispiel einer erfindungsgemäßen Prüfroutine als Flussdiagramm;
- Figur 3: ein Ausführungsbeispiel einer Anwendung in unmodifizierter Form sowie eine erfindungsgemäß modifizierte Anwendung in schematischer Darstellung;
- Figur 4: ein Ausführungsbeispiel, das die Erzeugung einer modifizierten Anwendung als Flussdiagramm darstellt; und
- Figur 5: ein Ausführungsbeispiel der erfindungsgemäßen Vorrichtung in Blockdarstellung.

Einander entsprechende Teile sind in allen Figuren mit den gleichen Bezugszeichen versehen.

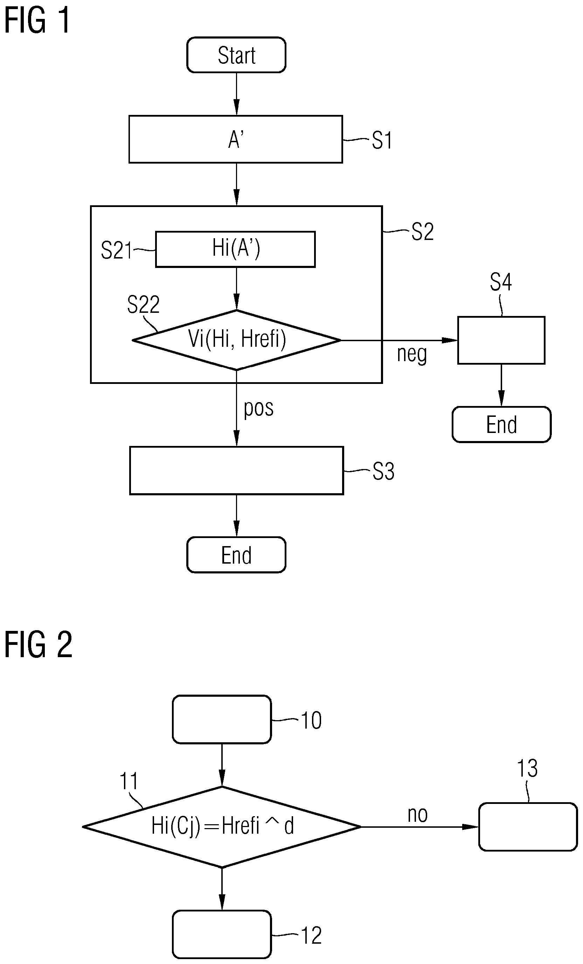

Figur 1 zeigt den schematischen Ablauf des Verfahrens, bei dem eine Anwendung A ausgeführt werden soll. Die Anwendung A umfasst Codestellen C1,... Ci, ... Cn, die als Gesamtheit die Anwendung ausbilden. Im Verfahrensschritt S1 wird nun eine modifizierte Anwendung A' bereitgestellt, die zusätzlich mindestens einen Prüfcode aufweist und somit von der ursprünglichen Anwendung, im Weiteren auch als unmodifizierte oder ursprüngliche Anwendung A bezeichnet, abweicht. Dabei kann die modifizierte Anwendung A' in einer direkt von einem persistenten Speichermedium geladen und gemessen werden. Die modifizierte Anwendung A' kann auch direkt aus einem transienten Speichermedium, beispielsweise einem Hauptspeicher, gelesen werden bzw. aus den Teilen des Addressraums der Anwendung, an denen einzelne Sektionen, bspw. statische Daten, der Programmbinärdatei abgebildet sind. So können Änderungen an Instruktionen, statischen Daten, etc., die vor oder während der Ausführung gemacht werden, festgestellt werden.

Anschließend wird im Verfahrensschritt S2 die modifizierte Anwendung A' ausgeführt, wobei der mindestens eine Prüfcode Pi bei Laufzeit der modifizierten Anwendung A' eine kryptographische Messfunktion Hi auf mindestens eine vorgegebene, zu messende Codestelle Cj der modifizierten Anwendung A' ausführt, siehe Schritt S21, und anschließend das Ergebnis der Messfunktion Hi mittels einer Prüfroutine Vi gegenüber einem Referenzwert Hrefi überprüft, siehe S22. Der Prüfcode umfasst dazu die Messfunktion Hi und die Prüfroutine Vi. Der Prüfcode Pi gibt des Weiteren die zu messende Codestelle Cj und die zu prüfende Codestelle Ck an, wobei die Prüfroutine Vi angibt, mit welcher Prüffunktion die zu prüfende Codestelle Ck und das Ergebnis der Messfunktion mit dem Referenzwert Hrefi überprüft wird.

Führt die Überprüfung S22 zu einem positiven Ergebnis, indem das Ergebnis der Messfunktion H mit dem Referenzwert Hrefi übereinstimmt, werden die im Sinne der Anwendung A korrekten Codestellen Ci ausgeführt, siehe Verfahrensschritt S3.

Der Ausdruck "im Sinne der Anwendung korrekten Codestellen" bezeichnet die Codestellen Ci, wie sie in der ursprünglichen, unmodifizierten Anwendung A zur Ausführung vorgesehen ist. Mit anderen Worten, nur bei Übereinstimmung des Ergebnisses der Messfunktion Hi mit dem Referenzwert Hrefi wird die im Sinne des Programms korrekte Codestelle Ci ausgeführt, zum Beispiel dadurch, dass zur richtigen Codestelle Ci gesprungen wird.

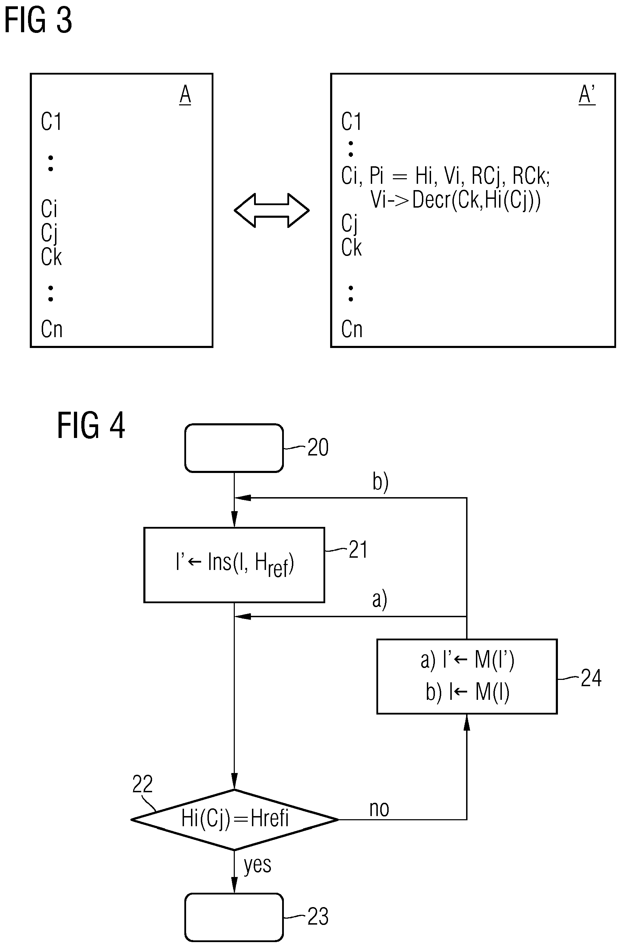

Insbesondere wenn der vorgegebene Referenzwert Href zufällig gewählt ist, muss die zu messende Codestelle in der modifizierte Anwendung A' derart gegenüber der entsprechenden unmodifizierten Codestelle verändert sein, dass beim Ausführen der Messfunktion auf die zu messende Codestelle, der Referenzwert als Messergebnis resultiert. Dies wird ausführlich zu Figur 4 erklärt.

Führt das Überprüfen zu einem negativen Ergebnis, wird eine Ersatzaktion, die bevorzugt durch mindestens eine Ersatzcodestelle Cl, die von der im Sinne der Anwendung A korrekten Codestelle Ci unterschiedlich ist, ausgeführt, siehe S4.

Eine Ersatzaktion kann beispielsweise durch eine Codestelle Cl ausgeführt werden, die bei einem negativen Prüfergebnis angesprungen wird. Mögliche Ersatzaktionen im Fall eines negativen Prüfergebnisses sind zum Beispiel ein Beenden der Anwendung, ein Erzeugen eines Logeintrags, ein Senden einer Nachricht an eine überwachende Stelle wie beispielsweise einen Server oder eine Monitoring-Einheit. Des Weiteren kann als Ersatzfunktion ein Schaltsignal gesetzt oder kritische Information, wie beispielsweise kryptographische Schlüssel, gelöscht werden. Allgemein kann als Ersatzfunktion eine dedizierte ausgewählte Codestelle Cl an Stelle der im Sinne der Anwendung A korrekten Codestelle Ci ausgeführt werden. Dabei ist die Codestelle Cl unterschiedlich zur korrekten Codestelle Ci.

Die Überprüfung kann bei Programmstart erfolgen. In einer weiteren Variante kann die Überprüfung des Ergebnisses der Messfunktion zyklisch zur Laufzeit erfolgen, beispielsweise durch eine dedizierte nebenläufig ausgeführte Codestelle. Ebenso können verschiedene Prüfcodes zueinander nebenläufig ausgeführt werden. Die Ausführung der modifizierten Anwendung A' und somit eine Überprüfung der Anwendung A kann abhängig von einem oder mehreren vorgegebenen Ereignissen oder gezielt vor dem Ausführen von kritischen Operationen ausgeführt werden.

Es kann die komplette Anwendung A, also alle Codestellen C1, ... Ci, ... Cn überprüft und mit einem einzigen, für alle Codestellen gültigen Referenzwert Hrefi verglichen werden. Es können aber auch einzelne, mehrere oder auch alle Codestellen Ci mit für die jeweilige Codestelle spezifischen Referenzwerten Hrefi verglichen werden. So können beispielsweise nur selektierte Codestellen vor ihrer Ausführung überprüft werden. Insbesondere kritische Codestellen können über spezifische Referenzwerte Hrefi und auch über spezifische Messfunktionen Hi geprüft, deren Integrität festgestellt und ein Reverse Engineering erschwert werden.

Insbesondere ist es vorteilhaft, mehrere verschiedenartige Prüfroutinen Vi zum selben Referenzwert Href einzusetzen. Für einen Angreifer ohne tiefere Analyse beziehungsweise Kenntnis der Codestellen ist es nicht ersichtlich, dass die Messfunktion auf denselben Referenzwert Href konditioniert wurde, also so eingestellt wurde, dass sich der Referenzwert ergibt. Dies erschwert es einem unberechtigten Dritten, die Codestellen der Anwendung zu modifizieren, da dann die Messfunktion, die Prüfroutine und/oder die dazugehörige Ersatzfunktion einzeln manipuliert werden müsste.

Das Ausführen der modifizierten Anwendung A', und damit das Ausführen des Prüfcodes Pi kann sowohl als eine explizite als auch eine implizite Prüfung stattfinden. Figur 2 zeigt ein Ausführungsbeispiel einer Prüfroutine für eine explizite Prüfung der modifizierten Anwendung A'. Bei einer expliziten Prüfung ist im Prüfcode Pi neben der zu verwendenden Prüfroutine Vi und Messfunktion Hi auch der Referenzwert Hrefi enthalten und somit vorgegeben. Die bereitgestellte modifizierte Anwendung A' ist gegenüber der ursprünglichen Anwendung A derart verändert worden, dass beim Ausführen der Messfunktion Hi auf die zu messende Codestelle Cj der vorgegebene Referenzwert Hrefi als Messergebnis resultiert. Das Erstellen der modifizierten Anwendung A' wird im Weiteren als Instrumentieren bezeichnet.

Dazu werden für eine Programmbinärdatei I einer Anwendung A', die eine Prüfroutine Vi enthält, Hrefi beliebig, beispielsweise zufällig, gewählt und die Instrumentierung so vorgenommen, dass Hrefi anschließend als Vergleichswert in der Prüffunktion vorliegt. Das wird beispielsweise dadurch erreicht, dass der Wert d=Hi(Cj)^Hrefi im Zuge der Instrumentierung an einer auf den Messwert Hi(Cj) rückwirkungsfreien Stelle in der modifizierten Anwendung A' hinterlegt wird und die Prüffunktion die Gleichheit Hi(Cj)= Hrefi^d verifiziert. Das Zeichen ^ bezeichnet hier ein "exklusives oder", XOR.

Zur Laufzeit der Anwendung A' liegt im Ausgangszustand 10 der Prüfroutine Vi und das Ergebnis der Messfunktion Hi angewandt auf die Codestelle Cj in der modifizierten Anwendung A' vor. Der zugehörige Referenzwert Hrefi ist durch den Prüfcode Pi vorgegeben. Die Prüfroutine Vi führt im Schritt 11 einen Vergleich zwischen dem Ergebnis der Messfunktion Hi(Cj) mit dem Wert Hrefi^d, durch. Dieser Vergleich stellt die eigentliche Prüffunktion der Prüfroutine Vi dar. Stimmt das Messergebnis Hi(Cj) mit dem vorgegebenen Wert Hrefi^d überein, gibt die Prüfroutine Vi das positive Prüfergebnis aus und ist damit beendet, siehe Schritt 12. Das ausgegebene positive Prüfergebnis wird als Eingabewert an Verfahrensschritt S3 in Figur 1 weitergegeben. Wird im Verfahrensschritt 11 ein negatives Prüfergebnis ermittelt, veranlasst die Prüfroutine eine Ersatzfunktion, siehe Schritt 13 und Verfahrensschritt S4 in Figur 1.

Für den Instrumentierungsprozess wird beispielsweise als Messfunktion Hi eine kryptographische Hashfunktion gewählt. Wird die Codestelle Cj in der resultierenden modifizierten Anwendung A' vor der Ausführung verändert, zum Beispiel durch das Einfügen von schadhaften Instruktionen, wird diese mit hoher Wahrscheinlichkeit in der Prüfroutine Vi erkannt und es kann eine entsprechende Reaktion eingeleitet werden. Hierbei ist wichtig, dass die Ersatzcodestelle Cl nicht manipuliert wurde, so dass die Reaktion korrekt ausgeführt wird. Die Ersatzcodestelle Cl kann beispielsweise zum besseren Schutz obfuskiert, beispielsweise verschlüsselt, werden, damit ein Angreifer diese nicht leicht verändern kann. Auch die Obfuskation der Prüfroutine Vi ist vorteilhaft. Idealerweise sind Prüfroutine Vi und Ersatzcodestelle Cl gemeinsam in einem schwer trennbaren Block obfuskiert. Enthält die Prüfroutine dann Anweisungen, die im Fall eines positiven Prüfergebnisses für den korrekten Programmablauf der Anwendung A unabdingbar sind, kann ein Angreifer Prüfung und Ersatzcode nicht durch einfaches Übergehen, beispielsweise durch Aneinanderhängen von Nulloperationen deaktivieren, ohne dadurch die Anwendung nachteilig zu beeinflussen.

Figur 3 zeigt in schematischer Darstellung die ursprüngliche, nicht modifizierte Anwendung A mit einer Gesamtheit an Codestellen C1 bis Cn, sowie eine modifizierte Anwendung A', die für eine implizite Prüfung durch Instrumentieren der ursprünglichen Anwendung A erzeugt wurde.

Die modifizierte Anwendung A' umfasst hier beispielhaft dargestellt einen Prüfcode Pi, der eine Prüfroutine Vi, eine Messoperation Hi sowie Referenzen RCj, RCk auf die zu messende Codestelle Cj und die zu überprüfende Codestelle Ck, beispielsweise in Form von deren Adressen, umfasst. Als Prüffunktion für eine implizite Prüfung wird beispielsweise eine Entschlüsselungsfunktion Decr verwendet, die auf die zu prüfende Codestelle Ck angewandt wird. Dabei liefert das Messergebnis der Messfunktion Hi angewandt auf die zu messende Stelle Cj den Entschlüsselungsschlüssel. Der Entschlüsselungsschlüssel wird also erst zur Laufzeit erstellt und ist nicht im Prüfcode enthalten. Bei der Erstellung der modifizierten Anwendung A' wird die zu messende Codestelle Cj derart erstellt, dass bei Anwendung der Messfunktion Hi auf die zu messende Codestelle der vorher gewählte Referenzwert Hrefi als Messergebnis resultiert. Gibt es keine Überschneidungen zwischen Cj und Ck, kann schon vorab Hrefi=Hi(Cj) gewählt werden. Somit ergibt sich implizit aus der Übereinstimmung des Messwertes Hi(Cj) mit dem Referenzwert Hrefi ein positives Prüfergebnis, da nur in diesem Fall die zu prüfende Codestelle Ck in die ursprüngliche und somit im Sinne der Anwendung korrekte Codestelle überführt werden kann.

Die zu messende Codestelle Cj kann jedoch auch Teile oder den gesamten Referenzwert Hrefi als integralen Bestandteil enthalten. In diesem Fall geht der Referenzwert Hrefi in die die Messfunktion Hi ein. Dies erhöht jedoch den Aufwand zur Erstellung der zu messenden Codestelle Cj beziehungsweise der modifizierten Anwendung A', da dann eine Selbstreflexion vorliegt und Hrefi nicht vorab als Hrefi=Hi(Cj) gewählt werden kann. Durch die Einbeziehung des Referenzwerts Hrefi in die zu messende Codestelle Cj wird eine entsprechende Modifikation durch einen Angreifer erheblich erschwert und ein Analysieren der Codestellen für ein Reverse Engineering ebenfalls erheblich erschwert.

Die modifizierte Anwendung A' wird bei einer impliziten Prüfung aus einer bereits übersetzten Programmbinärdatei I=(I1, I2, 13) erstellt, die aus einer Prüfroutine I1, einer Menge an zu schützenden Codestellen I2 und einer zu prüfenden Codestelle I3 besteht, indem als modifizierte Programmbinärdatei I'=Ins(I, Href)=(I1, 12, I3')=Encrypt(Plaintext=I3, Key=Href)) gewählt wird. Die Prüffunktion entschlüsselt dabei den verschlüsselten Block I3' mit Hi(12) als Schlüssel. Es wird somit als Messfunktion eine kryptographische Hashfunktion Hi gewählt. Kann Href aufgrund von Selbstreflexion nicht vorab als Href=Hi(I2) festgelegt werden, so ist im Allgemeinen Hi(I2)≠Href. In diesem Fall kann der Prozess beispielsweise mit logisch äquivalenten Änderungen an der Binärdatei, die durch die Modifikationsfunktion M vorgenommenen werden, oder mit einer neuen zufälligen Wahl des Referenzwertes Href wiederholt werden. Die Messfunktion Hi bzw. die Bitlänge des Messwertes sollten dementsprechend so gewählt sein, dass die Gleichheit von Hi(I2)=Href in einer vorgegebenen Zeit mit hoher Wahrscheinlichkeit gilt, das heißt der Instrumentierungsprozess terminiert. Bei der impliziten Überprüfung entsteht der Vorteil, dass keine Ersatzcodestelle nötig ist. Eine Manipulation führt mit hoher Wahrscheinlichkeit dazu, dass die verschlüsselten Instruktionen nicht richtig entschlüsselt werden, wodurch die manipulierte Anwendung zum Absturz kommt.

Die Messfunktion Hi kann sowohl bei der impliziten als auch bei der expliziten Prüfung eine kryptographische Hashfunktion sein. Als kryptographische Hashfunktion kann beispielsweise die Hashfunktion Message Digest Algorithm 5, kurz MD5, oder ein sicherer Hash-Algorithmus, beispielsweise SHA-256 oder SHA-3, verwendet werden. Die Messfunktion Hi kann aber auch komplexer aufgebaut sein, indem sie beispielsweise nur gewisse Teile einer Eingabe misst, oder die gesamte Eingabe misst. Die Eingabe ist hierbei eine oder mehrere zu messende Codestellen. Dabei kann eine zu messende Codestelle Cj auch eine ursprüngliche, nicht veränderte Codestelle der Anwendung A sein.

Ist der Referenzwert Hrefi im Prüfcode Pi enthalten, kann er zusätzlich geschützt werden, beispielsweise durch Verschlüsselung, so dass der Referenzwert Hrefi nicht leicht zu modifizieren ist.

Die kryptographische Hashfunktion kann insbesondere auch den ermittelten Hashwert als Ausgabewert auf eine vorbestimmte Anzahl von Ausgabebits, insbesondere eine geringere Anzahl von Ausgabebits als der eigentliche Hashwert trunkieren, also abschneiden. Dies erleichtert insbesondere in Fällen von Selbstreflexion das Erzeugen der modifizierten Anwendung, wenn sich beim Durchführen der Messfunktion auf vom gewählten Referenzwert Hrefi abhängige Teile der modifizierten Anwendung wieder der insbesondere zufällig gewählte Referenzwert Hrefi als Resultat ergeben muss.

Um den Instrumentierungsaufwand zur Erstellung der zu messenden Codestelle Cj beziehungsweise der modifizierten Anwendung A' zu reduzieren, können beispielsweise Hashwerte mehrerer Codestellen ermittelt werden, wobei nur ein fest vorgeschriebener Teil davon mit entsprechenden Referenzwerten übereinstimmen muss. Anhand von Figur 4 wird das Erzeugen einer zu messenden Codestelle Cj oder einer modifizierten Anwendung A' basierend auf der im Sinne der Anwendung korrekten Codestelle beziehungsweise der ursprünglichen Anwendung A beschrieben. Eine einzelne Codestelle, mehrere Codestellen oder auch die Anwendung A' sind im Weiteren allgemein als Codestelle und mit dem Referenzzeichen I bezeichnet.

Im Startzustand 20 liegt die Codestelle I entweder als Quellcode oder als übersetzte Programmbinärdatei vor.

Nun wird in Verfahrensschritt 21 mindestens ein Referenzwert Hrefi gewählt. Bevorzugt wird der Referenzwert Hrefi zufällig gewählt. Des Weiteren wird die Messfunktion Hi, beispielsweise eine kryptographische Hashfunktion festgelegt.

Diese wird beispielsweise zur Reduktion des Instrumentierungsaufwands auf eine kleinere Zahl an Ausgangsbits trunkiert. Des Weiteren wird die Prüfroutine Vi vorgegeben. Mit dieser Information wird eine modifizierte Codestelle I' mit mindestens einer zu messenden Codestelle Cj instrumentiert. Die Prüfroutine Vi, sowie die Messfunktion Hi werden entsprechend in den Prüfcode Pi codiert. Der ausgewählte Referenzwert Hrefi kann für eine explizite Überprüfung ebenfalls in den Prüfcode Pi eincodiert werden und zusätzlich geschützt, beispielsweise verschlüsselt, werden, so dass dieser nicht leicht zu modifizieren ist.

In Schritt 22 wird nun die Messfunktion Hi auf die zu messende Codestelle Cj angewandt und die Prüffunktion angewandt, hier beispielsweise mit dem vorher gewählten Referenzwert Hrefi verglichen. Stimmt das Ergebnis der Hashfunktion angewandt auf Cj mit dem Referenzwert Hrefi überein, ist der Instrumentierungsvorgang beendet, siehe Schritt 23. Das heißt die modifizierte Codestelle I' wird so generiert, dass bei Anwendung der Messfunktion Hi bei Durchführung der Prüfroutine Vi der Referenzwert mit einem positiven Ergebnis beim Überprüfen resultiert.

Stimmt das aus der Messfunktion Hi(Cj) resultierende Ergebnis der Messfunktion nicht mit dem gewählten Referenzwert Hrefi überein, wird im Verfahrensschritt 24 eine Modifikationsfunktion M ausgeführt. Die Modifikationsfunktion M kann dabei entweder auf die modifizierte Codestelle I' oder auf die ursprüngliche Codestelle I angewandt werden. Das Ergebnis der Modifikationsfunktion M angewandt auf die modifizierte Codestelle I' wird daraufhin erneut im Verfahrensschritt 22 überprüft. Wird die Modifikationsfunktion M auf die nicht modifizierte Codestelle I angewandt, wird aus der resultierenden unmodifizierten Codestelle I im Verfahrensschritt 21 erneut entsprechend der verwendeten Messfunktion Hi eine modifizierte Anwendung beziehungsweise Codestelle erzeugt und im Verfahrensschritten 22 erneut überprüft.

Die Modifikationsfunktion M transformiert die Codestelle I logisch äquivalent auf die modifizierte Codestelle I'. Beispiele für eine solche Modifikationsfunktion sind:
Ein Aufteilen von Konstanten. Eine Berechnung a+X mit einer Konstanten X, die in der unmodifizierten oder modifizierten Codestelle I vorliegt, kann logisch äquivalent ersetzt werden durch eine Berechnung von a+Y+Z mit Y+Z = X = konstant.

Die Modifikationsfunktion M kann auch eine Obfuskationsroutine sein, die die unmodifizierte Codestelle I oder die modifizierte Codestelle I' logisch äquivalent in einen obfuskierten Quellcode oder eine Binärdatei transformiert. Dabei kann als Eingabe für die Obfuskation eine Zufallszahl verwendet werden, zum Beispiel zum Initialisieren eines Pseudo-Zufallszahlen-Generators, der in der Obfuskation zur Erzeugung von Zufälligkeit verwendet wird.

Die Modifikationsfunktion M kann auch durch einen gezielten Einbau von Dummy-Werten erzielt werden, indem diese auf das Programm nur scheinbar einen Einfluss haben. Durch die Veränderung solcher Dummy-Werte mittels der Modifikationsfunktion M können auf Entwicklerseite logisch äquivalente Codevarianten generiert werden, während ein Angreifer, der nicht um die Einflusslosigkeit der Dummy-Werte weiß, nicht analog vorgehen kann.

Um den Instrumentierungsaufwand zu verringern, kann vorab entschieden werden, den Ausgabewert der Messfunktion Hi, die beispielsweise als Hashfunktion gewählt werden kann, zu trunkieren, beispielsweise auf 16 Bit. Dies ist insbesondere relevant für den Fall, dass der Referenzwert Hrefi bei der Instrumentierung nicht rückwirkungsfrei, beziehungsweise gezielt gesetzt werden kann, weil entweder die Speicherstelle für den Referenzwert Hrefi selbst Teil des gemessenen Inputs, also der modifizierten Codestelle I' ist, oder weil der Zielwert für den Referenzwert Hrefi fest als implizit angenommener Wert der Prüfroutine Vi ist.

Ist das Verfahren in Schritt 23 abgeschlossen, kann das Verfahren für eine nächste Codestelle wiederholt werden. Dabei können andere Referenzwert Hrefj, Messfunktionen Hj oder Modifikationsfunktionen Mj zum Einsatz kommen.

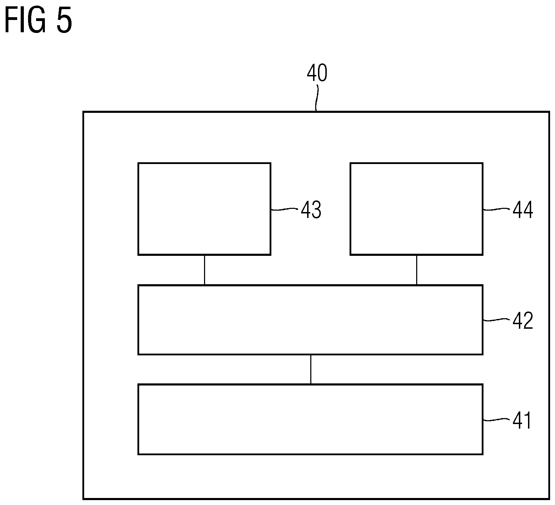

Figur 5 zeigt eine Vorrichtung zum Schützen einer Computer-implementierten Anwendung vor Manipulation 40. Sie umfasst eine Speichereinheit 41, eine Prüfeinheit 42 sowie eine Anwendungseinheit 43. Die Speichereinheit 41 ist derart ausgebildet, die modifizierte Anwendung, die gegenüber der Anwendung mindestens zusätzlich mindestens einen Prüfcode Pi umfasst, bereitzustellen. Die Prüfeinheit 42 ist derart ausgebildet, die modifizierte Anwendung auszuführen, wobei der mindestens eine Prüfcode bei Laufzeit der modifizierten Anwendung die Schritte des Ausführens der kryptographischen Messfunktion auf mindestens eine vorgegebene, zu messende Codestelle der modifizierten Anwendung ausgeführt wird, und das Ergebnisses der Messfunktion gegenüber mindestens einem Referenzwert überprüft wird . Die Anwendungseinheit 43 ist derart ausgebildet, die im Sinne der Anwendung korrekte Codestelle C1 auszuführen, wenn das Prüfen zu einem positiven Prüfergebnis führt.

Der Aufwand für einen Angreifer eine Applikation so zu modifizieren, dass die Integritätsprüfung nicht fehlschlägt, ist somit hoch. Durch eine geeignete Konstruktion der Prüfroutinen kann der Mechanismus bezüglich Speicherverbrauch und benötigter Rechenzeit sehr effizient realisiert werden. Die Erfindung kann zudem in Kombination mit bekannten Methoden zur Überprüfung der Integrität verwendet werden, um die Robustheit zu erhöhen.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum Schützen einer Computer-implementierten Anwendung (A) vor Manipulation mit den Verfahrensschritten:
- Bereitstellen (S1) einer modifizierten Anwendung (A'), die gegenüber der Anwendung (A), die eine Vielzahl von einzelnen Codestellen (C1,..,Ci,..,Cn) aufweist, zusätzlich mindestens einen Prüfcode (Pi) umfasst,
- Ausführen (S2) der modifizierten Anwendung (A'), wobei der mindestens eine Prüfcode (Pi) bei Laufzeit der modifizierten Anwendung (A') die Schritte durchführt:
- Ausführen (S21) einer kryptographischen Messfunktion (Hi) auf mindestens eine vorgegebene, zu messende Codestelle (Cj) der modifizierten Anwendung (A'), und
- Überprüfen (S22) des Ergebnisses der Messfunktion (Hi) gegenüber mindestens einem im Voraus bestimmten Referenzwert (Hrefi), und
- Ausführen (S3) der im Sinne der Anwendung (A) korrekten Codestellen (Ci), wenn das Ergebnis der Messfunktion (Hi) mit dem Referenzwert (Hrefi) übereinstimmt,
wobei der Prüfcode (Pi) die Messfunktion (Hi) und eine Prüfroutine (Vi) umfasst sowie die zu messende Codestelle (Cj) und eine zu prüfende Codestelle (Ck) angibt, wobei die Prüfroutine (Vi) angibt, mit welcher Prüffunktion die zu prüfende Codestelle (Ck) und das Ergebnis der Messfunktion (Hi) mit dem Referenzwert (Hrefi) überprüft wird.

2. Verfahren nach Anspruch 1, wobei, wenn das Ergebnis der Messfunktion (Hi) nicht mit dem Referenzwert (Hrefi) übereinstimmt, eine Ersatzaktion ausgeführt wird, indem mindestens eine Ersatzcodestelle (Cl), die von der im Sinne der Anwendung (A) korrekten Codestelle (Ci) unterschiedlich ist, oder im Sinne der Anwendung (A) fehlerhaft ist, ausgeführt wird.

3. Verfahren nach einem der vorangehenden Ansprüche, wobei der mindestens eine Prüfcode (Pi) während der Laufzeit der Anwendung (A) einmalig, in zyklischen Abständen, vor Ausführung mindestens einer vorgegebenen Codestelle (Ci), oder nach einem Eintreten eines vorgegebenen Ereignisses ausgeführt wird.

4. Verfahren nach einem der vorangehenden Ansprüche, wobei die Messfunktion (Hi) eine kryptographische Hashfunktion, insbesondere mit einem auf eine geringe Anzahl von Ausgabebits trunkierten Ausgabewert, ist.

5. Verfahren nach einem der vorangehenden Ansprüche, wobei die Messfunktion ausschließlich auf eine oder mehrere zu messende Codestellen (Cj) ausgeführt wird.

6. Verfahren nach Anspruch 1 und 4, wobei die kryptographische Messfunktion (Hi) auf die mindestens eine vorgegebene zu messende Codestelle (Cj) und zusätzlich auf zumindest Teile der Prüfroutine (Vi) und/oder auf zumindest Teile der Messfunktion (Hi) des Prüfcodes (Pi) und/oder auf mindestens Teile des Referenzwertes (Hrefi) ausgeführt wird.

7. Verfahren nach einem der Ansprüche 1 bis 6, wobei durch die Prüfroutine (Vi) ein Vergleichen des Ergebnisses der Messfunktion (Hi) mit dem Referenzwert (Hrefi) durchgeführt wird.

8. Verfahren nach Anspruch 5 und 7 oder 6 und 7, wobei der Referenzwert (Hrefi) vor dem Bereitstellen der modifizierten Anwendung (A') explizit als Teil des Prüfcodes (Pi) in der modifizierten Anwendung (A') angeordnet wird.

9. Verfahren nach einem der Ansprüche 1 bis 6, wobei durch die Prüfroutine (Vi) eine kryptographische Entschlüsselungsfunktion auf eine angepasste, zu prüfende Codestelle (Ck) mit dem Referenzwert (Hrefi) als zugehörigem Entschlüsselungsschlüssel ausgeführt wird.

10. Verfahren nach Anspruch 9, wobei vor dem Bereitstellen der modifizierten Anwendung (A') die angepasste, zu prüfende Codestelle (Ck) durch Verschlüsseln der zu prüfenden Codestelle (Cj) mit dem Referenzwert (Hrefi) ermittelt wird und die zu prüfende Codestelle (Cj) durch die angepasste zu prüfende Codestelle (Ck) in der modifizierten Anwendung (A') ersetzt wird.

11. Verfahren nach einem der Ansprüche 9 oder 10, wobei beim Erstellen des Prüfcodes (Pi) ein zufälliger Referenzwert (Hrefi) gewählt wird und die angepasste, zu prüfende Codestelle (Ck) derart erzeugt wird, dass das Ergebnis der Messfunktion (Hi) angewandt auf die angepasste, zu prüfende Codestelle (Ck) mit dem zufällig gewählten Referenzwert (Hrefi) übereinstimmt.

12. Verfahren nach einem der vorangehenden Ansprüche, wobei unterschiedliche Messfunktionen (Hi) zum Messen von verschiedenen zu messenden Codestellen (Cj) und/oder unterschiedliche Prüfroutinen (Vi) zum Überprüfen von verschiedenen zu prüfenden Codestellen (Ck) verwendet werden.

13. Verfahren nach einem der vorangehenden Ansprüche, wobei Ersatzcodestelle (Cj) und/oder die Prüfroutine (V) kryptographisch geschützt oder obfuskiert in der modifizierten Anwendung (A') angeordnet ist.

14. Vorrichtung zum Schützen einer Computer-implementierten Anwendung (A) vor Manipulation umfassend:
- eine Speichereinheit (41) die derart ausgebildet ist, eine modifizierte Anwendung (A'), die gegenüber der Anwendung (A), die eine Vielzahl von einzelnen Codestellen (C1,..,Ci,..,Cn) aufweist, zusätzlich mindestens einen Prüfcode (Pi) umfasst, bereitzustellen,
- eine Prüfeinheit (42), die derart ausgebildet ist, die modifizierte Anwendung (A') auszuführen, wobei der mindestens eine Prüfcode (Pi) bei Laufzeit der modifizierten Anwendung (A') die Schritte durchführt:
- Ausführen (S21) einer kryptographischen Messfunktion (Hi) auf mindestens eine vorgegebene, zu messende Codestelle (Cj) der modifizierten Anwendung (A'), und
- Überprüfen (S22) des Ergebnisses der Messfunktion (Hi) gegenüber mindestens einem Referenzwert (Hrefi), und
- eine Anwendungseinheit (43), die derart ausgebildet ist, die im Sinne der Anwendung (A) korrekte Codestelle (Ci) auszuführen, wenn das Ergebnis der Messfunktion (Hi) mit dem Referenzwert (Hrefi) übereinstimmt,
wobei der Prüfcode (Pi) die Messfunktion (Hi) und eine Prüfroutine (Vi) umfasst sowie die zu messende Codestelle (Cj) und die zu prüfende Codestelle (Ck) angibt, wobei die Prüfroutine (Vi) angibt, mit welcher Prüffunktion die zu prüfende Codestelle (Ck) und das Ergebnis der Messfunktion (Hi) mit dem Referenzwert (Hrefi) überprüft wird.

15. Computerprogrammprodukt, umfassend ein Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 13 durchzuführen.

## Claims

1. Method for protecting a computer-implemented application (A) from manipulation, having the method steps of:
- providing (S1) a modified application (A') which, compared to the application (A) that has a multiplicity of individual code positions (C1,..,Ci,..,Cn), additionally comprises at least one check code (Pi),
- executing (S2) the modified application (A'), wherein, while the modified application (A') is running, the at least one check code (Pi) carries out the steps of:
- performing (S21) a cryptographic measurement function (Hi) on at least one predefined code position (Cj) that is to be measured in the modified application (A'), and
- verifying (S22) the result of the measurement function (Hi) against at least one reference value (Hrefi) determined in advance, and
- executing (S3) the code positions (Ci) that are correct in reference to the application (A) if the result of the measurement function (Hi) matches with the reference value (Hrefi),
wherein the check code (Pi) comprises the measurement function (Hi) and a check routine (Vi) and also specifies the code position (Cj) that is to be measured and a code position (Ck) that is to be checked, wherein the check routine (Vi) specifies which checking function is used to verify the code position (Ck) that is to be checked and the result of the measurement function (Hi) with the reference value (Hrefi).

2. Method according to Claim 1, wherein, if the result of the measurement function (Hi) does not match with the reference value (Hrefi), a substitute action is performed by executing at least one substitute code position (C1), which is different from the code position (Ci) that is correct in reference to the application (A), or which is incorrect in reference to the application (A).

3. Method according to either of the preceding claims, wherein, while the application (A) is running, the at least one check code (Pi) is executed once, at cyclical intervals, before at least one predefined code position (Ci) is executed, or after a predefined result has occurred.

4. Method according to one of the preceding claims, wherein the measurement function (Hi) is a cryptographic hash function, in particular with an output value that is truncated to a small number of output bits.

5. Method according to one of the preceding claims, wherein the measurement function is performed exclusively on one or more code positions (Cj) that are to be measured.

6. Method according to Claim 1 and 4, wherein the cryptographic measurement function (Hi) is performed on the at least one predefined code position (Cj) that is to be measured and additionally on at least parts of the check routine (Vi) and/or on at least parts of the measurement function (Hi) of the check code (Pi) and/or on at least parts of the reference value (Hrefi).

7. Method according to one of Claims 1 to 6, wherein the check routine (Vi) compares the result of the measurement function (Hi) with the reference value (Hrefi).

8. Method according to Claim 5 and 7 or 6 and 7, wherein the reference value (Hrefi) is arranged explicitly as part of the check code (Pi) in the modified application (A') before the modified application (A') is provided.

9. Method according to one of Claims 1 to 6, wherein the check routine (Vi) performs a cryptographic decryption function on an adapted code position (Ck) that is to be checked, using the reference value (Hrefi) as the associated decryption key.

10. Method according to Claim 9, wherein, before the modified application (A') is provided, the adapted code position (Ck) that is to be checked is ascertained by encrypting the code position (Cj) that is to be checked with the reference value (Hrefi), and the code position (Cj) that is to be checked is replaced in the modified application (A') by the adapted code position (Ck) that is to be checked.

11. Method according to either of Claims 9 and 10, wherein, when the check code (Pi) is created, a random reference value (Hrefi) is selected and the adapted code position (Ck) that is to be checked is produced in such a way that the result of the measurement function (Hi) applied to the adapted code position (Ck) that is to be checked matches with the randomly selected reference value (Hrefi).

12. Method according to one of the preceding claims, wherein various measurement functions (Hi) are used for measuring different code positions (Cj) that are to be measured and/or various check routines (Vi) are used for verifying different code positions (Ck) that are to be checked.

13. Method according to one of the preceding claims, wherein the substitute code position (Cj) and/or the check routine (V) is/are arranged in the modified application (A') in a cryptographically protected or obfuscated manner.

14. Apparatus for protecting a computer-implemented application (A) from manipulation, comprising:
- a memory unit (41) which is configured so as to provide a modified application (A') which, compared to the application (A) that has a multiplicity of individual code positions (C1,..,Ci,..,Cn), additionally comprises at least one check code (Pi),
- a checking unit (42) which is configured so as to execute the modified application (A'), wherein, while the modified application (A') is running, the at least one check code (Pi) carries out the steps of:
- performing (S21) a cryptographic measurement function (Hi) on at least one predefined code position (Cj) that is to be measured in the modified application (A'), and
- verifying (S22) the result of the measurement function (Hi) against at least one reference value (Hrefi), and
- an application unit (43) which is configured so as to execute the code position (Ci) that is correct in reference to the application (A) if the result of the measurement function (Hi) matches with the reference value (Hrefi),
wherein the check code (Pi) comprises the measurement function (Hi) and a check routine (Vi) and also specifies the code position (Cj) that is to be measured and the code position (Ck) that is to be checked, wherein the check routine (Vi) specifies which checking function is used to verify the code position (Ck) that is to be checked and the result of the measurement function (Hi) with the reference value (Hrefi).

15. Computer program product, comprising a computer-readable medium which can be loaded directly into a memory of a digital computer, comprising program code parts which are suitable for carrying out the steps of the method according to one of Claims 1 to 13.

## Revendications

1. Procédé de protection d'une application mise en oeuvre par ordinateur (A) contre la manipulation comprenant les étapes de procédé :
- mise à disposition (S1) d'une application modifiée (A') qui, par rapport à l'application (A) qui présente une pluralité de différentes positions de code (C1, .., Ci, .., Cn), comprend en outre au moins un code de vérification (Pi),
- exécution (S2) de l'application modifiée (A'), le au moins un code de vérification (Pi) au terme de l'application modifiée (A') effectuant les étapes :
- d'exécution (S21) d'une fonction de mesure cryptographique (Hi) sur au moins une position de code (Cj) prédéfinie à mesurer de l'application modifiée (A'), et
- de vérification (S22) du résultat de la fonction de mesure (Hi) par rapport à au moins une valeur de référence (Hrefi) déterminée à l'avance, et
- exécution (S3) des positions de code (Ci) correctes au sens de l'application (A), lorsque le résultat de la fonction de mesure (Hi) coïncide avec la valeur de référence (Hrefi),
dans lequel le code de vérification (Pi) comprend la fonction de mesure (Hi) et une routine de vérification (Vi) et indique aussi la position de code (Cj) à mesurer et une position de code (Ck) à vérifier, dans lequel la routine de vérification (Vi) indique avec quelle fonction de vérification est vérifié(e) la position de code (Ck) à vérifier et le résultat de la fonction de mesure (Hi) avec la valeur de référence (Hrefi).

2. Procédé selon la revendication 1, dans lequel, lorsque le résultat de la fonction de mesure (Hi) ne coïncide pas avec la valeur de référence (Hrefi), une action de remplacement est exécutée dans laquelle au moins une position de code de remplacement (Cl), qui est différente de la position de code (Ci) correcte au sens de l'application (A), ou est erronée au sens de l'application (A), est exécutée.

3. Procédé selon l'une des revendications précédentes, dans lequel le au moins un code de vérification (Pi) est exécuté pendant la durée de l'application (A) une fois, à intervalles cycliques, avant l'exécution d'au moins une position de code prédéfinie (Ci), ou après survenance d'un évènement prédéfini.

4. Procédé selon l'une des revendications précédentes, dans lequel la fonction de mesure (Hi) est une fonction de hachage cryptographique, plus particulièrement avec une valeur de sortie tronquée à un faible nombre de bits de sortie.

5. Procédé selon l'une des revendications précédentes, dans lequel la fonction de mesure est exécutée exclusivement sur une ou plusieurs positions de code (Cj) à mesurer.

6. Procédé selon la revendication 1 et 4, dans lequel la fonction de mesure cryptographique (Hi) est exécutée sur la au moins une position de code (Cj) prédéfinie à mesurer et, en plus, sur au moins des parties de la routine de vérification (Vi) et / ou sur au moins des parties de la fonction de mesure (Hi) du code de vérification (Pi) et / ou sur au moins des parties de la valeur de référence (Hrefi).

7. Procédé selon l'une des revendications 1 à 6, dans lequel est effectuée une comparaison du résultat de la fonction de mesure (Hi) avec la valeur de référence (Hrefi) par la routine de vérification (Vi).

8. Procédé selon la revendication 5 et 7 ou 6 et 7, dans lequel la valeur de référence (Hrefi) est disposée avant la mise à disposition de l'application modifiée (A') de façon explicite comme partie du code de vérification (Pi) dans l'application modifiée (A').

9. Procédé selon l'une des revendications 1 à 6, dans lequel une fonction de décodage cryptographique est exécutée par la routine de vérification (Vi) sur une position de code (Ck) adaptée, à vérifier avec la valeur de référence (Hrefi) comme clé de décodage correspondante.

10. Procédé selon la revendication 9, dans lequel avant la mise à disposition de l'application modifiée (A'), la position de code (Ck) à vérifier adaptée est déterminée par codage de la position de code (Cj) à vérifier avec la valeur de référence (Hrefi) et la position de code (Cj) à vérifier est remplacée par la position de code (Ck) à vérifier adaptée dans l'application modifiée (A').

11. Procédé selon l'une des revendications 9 ou 10, dans lequel lors de la création du code de vérification (Pi), une valeur de référence (Hrefi) aléatoire est choisie et la position de code (Ck) à vérifier adaptée est produite de manière telle que le résultat de la fonction de mesure (Hi) appliqué à la position de code (Ck) à vérifier adaptée coïncide avec la valeur de référence (Hrefi) choisie aléatoirement.

12. Procédé selon l'une des revendications précédentes, dans lequel des fonctions de mesure différentes (Hi) pour mesurer des positions de code (Cj) différentes à mesurer et / ou des routines de vérification (Vi) différentes pour vérifier des positions de code (Ck) à vérifier différentes sont utilisées.

13. Procédé selon l'une des revendications précédentes, dans lequel une position de code de remplacement (Cj) et / ou la routine de vérification (V) est disposée en étant protégée ou obfusquée cryptographiquement dans l'application modifiée (A').

14. Dispositif de protection d'une application (A) mise en oeuvre par ordinateur avant manipulation comprenant :
- une unité de mémoire (41) qui est conçue de manière telle qu'une application modifiée (A') est mise à disposition qui, par rapport à l'application (A) qui présente une pluralité de différentes positions de code (C1, .., Ci, .., Cn), comprend en outre au moins un code de vérification (Pi),
- une unité de vérification (42) qui est conçue de manière à exécuter l'application modifiée (A'), le au moins un code de vérification (Pi) au terme de l'application modifiée (A') effectuant les étapes :
- d'exécution (S21) d'une fonction de mesure cryptographique (Hi) sur au moins une position de code (Cj) prédéfinie à mesurer de l'application modifiée (A'), et
- de vérification (S22) du résultat de la fonction de mesure (Hi) par rapport à au moins une valeur de référence (Hrefi), et
- une unité d'application (43) qui est conçue de manière à exécuter la position de code (Ci) correcte au sens de l'application (A), lorsque le résultat de la fonction de mesure (Hi) coïncide avec la valeur de référence (Hrefi),
dans lequel le code de vérification (Pi) comprend la fonction de mesure (Hi) et une routine de vérification (Vi) et indique aussi la position de code (Cj) à mesurer et la position de code (Ck) à vérifier, la routine de vérification (Vi) indiquant avec quelle fonction de vérification est vérifié(e) la position de code (Ck) à vérifier et le résultat de la fonction de mesure (Hi) avec la valeur de référence (Hrefi).

15. Produit de programme informatique comprenant un support lisible par ordinateur qui peut être chargé directement dans une mémoire d'un ordinateur numérique, comprenant des parties de code de programme qui sont appropriées pour exécuter les étapes du procédé selon l'une des revendications 1 à 13.
